# EUROPÄISCHE PATENTANMELDUNG

(11) **EP 1 659 666 A2**
(43) Veröffentlichungstag der Anmeldung: **24.05.2006**
(21) Anmeldenummer: 05405610.6
(22) Anmeldetag: 28.10.2005
(51) Int. Cl.: H02G 3/00

(54) **Haltevorrichtung für Kabel**

(30) Priorität: 18.11.2004 CH 190304
(71) Anmelder: Reichle & De-Massari AG, 8622 Wetzikon (CH)
(72) Erfinder: Gyagang, Tensing, 8335 Hittnau (CH)
(74) Vertreter: Frei Patent Attorneys

(57) **Zusammenfassung**

Die Haltevorrichtung für Kabel an einem vertikalen Panel (1) beinhaltet ein am Panel vorhandenes Führungselement (4) mit einer Führungsfläche (4.1) und einen Bügel (5). Dieser beisitzt einen Führungsabschnitt (5.1), der in das Führungselement einführbar ist. Dabei liegt ein unterhalb des Führungsabschnitts liegender Stützabschnitt (5.2) unter der Wirkung der Schwerkraft an der Panelfläche an, wobei ein Halteabschnitt (5.3) des Bügels zum Halten von Kabeln von der Panelfläche absteht. Das Führungselement kann so ausgeformt sein, dass eine Führungsfläche einen Anschlag für Bewegungen des Führungsabschnitts in vertikaler Richtung nach unten und in die Normalrichtung bildet und so solche Bewegungen verhindert. Der Bügel kann beispielsweise mindestens abschnittsweise zylindrisch geformt sein, wobei der Führungsabschnitt horizontal liegt. Das Führungselement kann einstückig mit dem Panel ausgeformt sein, es kann insbesondere durch prägen (oder tiefziehen) des Panelmaterials hergestellt sein und die Form einer Öse oder eines Hakens haben. Bei dieser Lösung ist die Herstellung deutlich vereinfacht, und die Anzahl notwendiger Teile wird minimal, sind doch nur das Panel selbst und der Bügel notwendig.

## Beschreibung

Die Erfindung betrifft eine Haltevorrichtung für das Führen von Kabeln an einem vertikalen Panel.

Solche Haltevorrichtungen werden für Anlagen benötigt, in denen eine Vielzahl von Steckverbindungen vorhanden sind. Dies ist beispielsweise an Verteilpunkten bei Kommunikationsnetzwerken der Fall. Häufig dienen sogenannte "Racks", d.h. Einbaugehäuse oder Baugruppenträger dazu, mehrere Geräte über- oder eventuell nebeneinander zu halten und eine einheitliche Front für Steckverbindungen zu schaffen. Oft werden zwischen den Geräten schmale Panels eingeschoben, die aus einer Platte mit Bügeln oder -bügelpaaren für Kabel bestehen. Diese Bügel dienen dazu, die manchmal in grossen Mengen vorhandenen Kabel zu führen und damit für Ordnung und einen optisch sauberen Eindruck zu sorgen. Im Speziellen sind angeschraubte, metallische Bügel sowie mit einem Schnappmechanismus aufsteckbare Kunststoffbügel erhältlich

Während die Kunststoffbügel aufgrund ihrer beschränkten Stabilität nur für gewisse Anwendungen in Frage kommen, erfüllen die metallischen, angeschraubten Bügel ihre Funktion in befriedigender Weise. Sie sind aber recht aufwändig in der Herstellung (üblicherweise ist pro Bügel ein Flansch mit Löchern vorhanden, und es müssen Schweissverbindungen angebracht werden), in der Montage (pro Bügel bestehen mindestens zwei Schraubverbindungen) und in der Logistik (es sind mehrere verschiedene Teile notwendig, nebst Schrauben auch Schraubenmuttern). Es wäre also wünschenswert, ein in Herstellung, Montage und/oder Logistik einfacheres und damit kostengünstigeres System zur Verfügung zu haben, welches in der Funktionalität den bestehenden Bügeln vorzugsweise mindestens ebenbürtig ist.

Der Erfindung stellt sich demnach die Aufgabe, eine Haltevorrichtung für das Führen von Kabeln an einem vertikalen Panel zur Verfügung zu stellen, welche Nachteile des Standes der Technik überwindet und welche insbesondere einfach in der Herstellung und/oder Montage ist und/oder aus nur wenigen Einzelteilen besteht.

Diese Aufgabe wird gelöst durch die Erfindung, wie sie in den Patentansprüchen definiert ist.

Die Haltevorrichtung dient zum Halten und Führen von Kabeln an einem Panel mit einer vertikalen Panelfläche, d.h. mit einer im Wesentlichen horizontal stehenden Flächennormale. Sie beinhaltet einen Bügel und ein am Panel vorhandenes Führungselement zum Einführen eines Führungsabschnittes des Bügels. Das Führungselement ragt über die Panelfläche hinaus und ist so ausgebildet, dass der Führungsabschnitt durch eine Bewegung des Bügels parallel zur Panelfläche einführbar ist und das Führungselement einen Anschlag für Bewegungen des Führungsabschnitts in die Normalrichtung bildet. Wenn der Führungsabschnitt in das Führungselement eingeführt ist, liegt ein in Schwerkraftrichtung unterhalb des Führungsabschnitts liegender Stützabschnitt an der Panelfläche an, wobei ein Halteabschnitt des Bügels zum Halten von Kabeln von der Panelfläche absteht..

"Horizontale Flächennormale" bedeutet nicht, dass die Panelfläche genau lotrecht bzw. die Flächennormale genau waagrecht stehen muss. Vielmehr sind auch Abweichungen von der Vertikale möglich.

"Unterhalb des Führungsabschnitts" heisst hier nicht notwendigerweise, dass der Stützabschnitt in unmittelbar vertikaler Richtung unter dem Führungsabschnitt liegt, sondern vielmehr, dass der Stützabschnitt ganz allgemein im montierten Zustand des Panels und der Haltevorrichtung bezüglich der Schwerkraftrichtung weniger hoch liegt.

Der Bügel ist vorzugsweise im wesentlichen formsteif und nur unter beträchtlichem Krafteinsatz elastisch deformierbar.

Das Führungselement kann so ausgeformt sein, dass eine Führungsfläche einen Anschlag für Bewegungen des Führungsabschnitts nebst für Bewegungen in die Normalrichtung auch für Bewegungen in vertikaler Richtung nach unten bildet. Der Bügel kann beispielsweise mindestens abschnittsweise zylindrisch geformt sein, wobei der Führungsabschnitt dann horizontal liegt. Durch diese Lösung - eine Führungsfläche dient als Stützfläche und bildet einen Anschlag für Bewegungen in vertikaler Richtung und in Normalrichtung nach 'aussen', was zusammen mit dem Anliegen des Stützabschnitts am Panel Stabilität bewirkt - ist nicht nötig, dass eine Klemmkraft das ganze Gewicht des Bügels und eventuell darauf abstützender Kabel trägt. Eine eventuelle vom Führungselement auf den Führungabschnitt ausgeübte Klemmkraft kann daher moderat sein, was das einschieben oder Einklicken des Führungsabschnittes ohne Werkzeug ermöglicht. Dadurch wird die Montage bedeutend einfacher.

Alternativ zum horizontalen Führungsabschnitt kann dieser auch vertikal liegen. Die Stabilität gegen Bewegungen vertikal nach unten wird dann beispielsweise durch einen Anschlag bewirkt, oder aber durch Eingreifen eines Bügel-Abschnittes in eine dafür vorgesehene Öffnung im Panel.

Das im montierten Zustand der Haltevorrichtung am Panel anliegende Teilstück des Bügels - es beinhaltet den Führungsabschnitt - weist vorzugsweise auch mindestens einen in über dem Führungsabschnitt liegenden Abschnitt auf. So bildet der Bügel selbst bei in das Führungselement eingeführtem Führungsabschnitt einen Schutz vor einem Verkippen des nach vorne abstehenden Halteabschnittes sowohl nach unten (aufgrund des Stützabschnitts) als auch nach oben (aufgrund des über dem Führungsabschnitt liegenden Abschnitts). Vorzugsweise sind auch bezüglich der horizontalen Richtung beidseitig des Führungselementes angeordnete am Panel anliegende Abschnitte vorhanden, die - oft in Ergänzung zu einer Führungswirkung des Führungselementes - eine Abstützung des Bügels gegen horizontale Verschwenkbewegungen bilden. Zusammen mit Anschlags- und/oder Rückhalteelementen können das Führungselement und das Anliegen des Teilstücks am Panel also die Position und Orientierung des Bügels bis auf Toleranzen vollständig bestimmen.

In einer Ausführungsform wird der Führungsabschnitt durch eine horizontale Bewegung entlang der Panelebene in das Führungselement eingeführt, bis der Bügel an einem Anschlagelement ansteht, welches wie das Führungselement von der Panelebene vorsteht. Dabei wird ein Abschnitt des Bügels beispielsweise über ein Rückhalteelement geführt. Bei dieser Bewegung wird dieser Abschnitt aufgrund der Ausformung des Führungselementes und des am Panel anliegenden Teilstücks des Bügels an die Panelfläche gedrückt, so dass das Führen über Rückhalteelement nur entgegen einer Federwirkung des Bügels möglich ist. Dadurch wird der Bügel in seiner Endposition zwischen dem Anschlagelement und dem Rückhalteelement auch in seiner horizontalen Position fixiert. Er kann entgegen der Federkraft wieder entfernt werden, indem der Bügelabschnitt wieder über das Rückhalteelement geschoben wird.

In einer anderen Ausführungsform ist das Führungselement als nach oben offener Haken ausgebildet, wobei der Führungsabschnitt von oben in das Führungselement einklinkbar ist. Auch in dieser Ausführungsform kann der Führungsabschnitt im wesentlichen zylindrisch sein und horizontal liegen.

Das Führungselement kann einstückig mit dem Panel ausgeformt sein, es kann insbesondere durch prägen, stanzprägen und/oder tiefziehen des Panelmaterials hergestellt sein. Es kann die Form einer Öse oder eines Hakens haben. Wenn das Führungselement mit dem Panel einstückig ausgeformt ist, wird die Herstellung deutlich vereinfacht, und die Anzahl notwendiger Teile wird minimal. Im Extremfall werden nur das Panel selbst sowie ein oder mehrere Bügel benötigt.

Im Folgenden werden Ausführungsbeispiele der Erfindung anhand von Zeichnungen genauer beschrieben. In den Zeichnungen zeigen:
- Fig. 1a und Fig. 1b je eine Ansicht eines nicht vollständig dargestellten Panels zur Befestigung an einem "Rack" mit einer bzw. zwei Haltevorrichtungen einer ersten Ausführungsform der Erfindung.
- Fig. 2a und 2b eine Ansicht von zwei Varianten eines Panels mit Haltevorrichtungen einer zweiten Ausführungsform.
- Fig. 3a und 3b je eine Ansicht von zwei Varianten eines Panels mit Haltevorrichtungen einer dritten Ausführungsform.
- Fig. 4 eine Ansicht eines Panels mit Haltevorrichtungen einer vierten Ausführungsform, wobei die Führungselemente der Haltevorrichtungen gemäss der ersten Ausführungsform ausgebildet sind.
- Fig. 5 eine Ansicht eines Panels mit Haltevorrichtungen einer fünften Ausführungsform.
- Fig. 6 eine Ansicht einer sechsten Ausführungsform, nämlich einer Haltevorrichtung mit vertikalem Führungselement.
- Fig. 7 eine Ansicht einer siebten Ausführungsform.

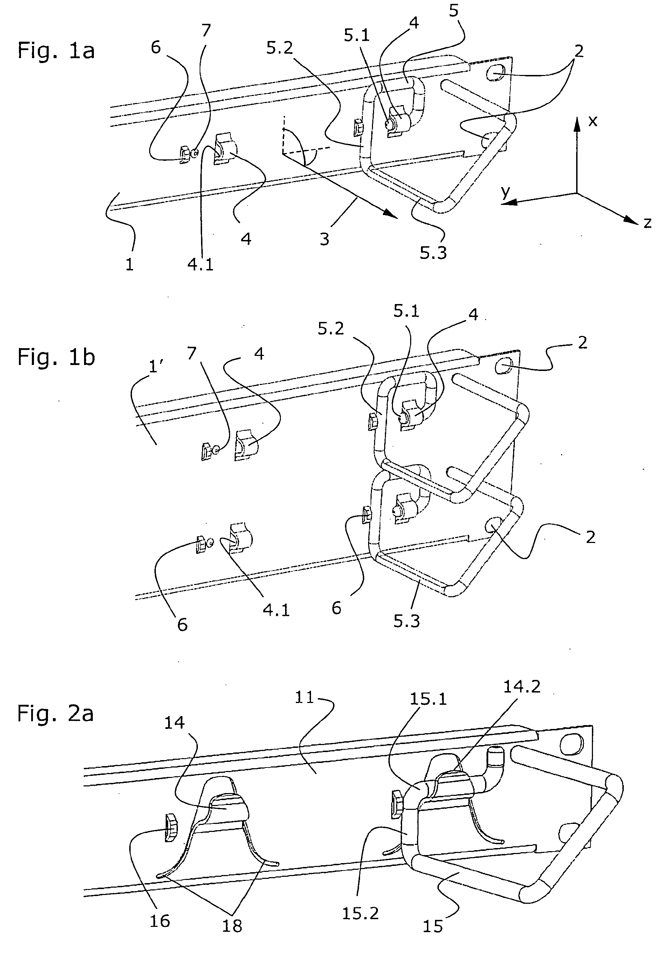

Das Panel 1 in **Figur 1a** ist plattenförmig ausgebildet, metallisch und besitzt Befestigungslöcher 2 zum Befestigen des Panels an einem Rack, so, dass es vertikal steht, d.h. die Frontflächen-Normalrichtung 3 (in diesem Text wird die Frontfläche oft "Panelfläche" genannt) ungefähr horizontal liegt. Die Normalrichtung 3 entspricht der z-Richtung im eingezeichneten Koordinatensystem. Die Haltevorrichtung weist ein mit dem Panel fix verbundenes Führungselement 4 auf. Dieses nämlich eine aus dem Panel geprägte Öse. Diese bildet auf der Innenseite eine Führungsfläche 4.1. Ein Führungsabschnitt 5.1 eines Bügels 5 ist ins Führungselement 4 einführbar. Der Bügel ist als Ganzes ein gebogener Runddraht mit einem Durchmesser von hier ca. 5 mm. Ein im wesentlichen J-förmiges Teilstück, zu dem auch der Führungsabschnitt 5.1 gehört liegt an der Panelfläche an, während ein C-förmiges Teilstück von dieser absteht und einen Halteabschnitt 5.3 für Kabel bildet. Die Auflage ist auf einen grösseren Durchmesser von bspw. 20 mm geprägt, damit aufliegende Kabel nicht beschädigt werden. Das am Panel anliegende J-förmige Teilstück besitzt auch Abschnitte die oberhalb des Führungselementes liegen, d.h. deren x-Koordinaten grösser sind als diejenigen des Führungselementes. Das vom Halteabschnitt gebildete "U" ist in der x-y-Ebene gegenüber der Vertikalen um ca. 45° geneigt. Dadurch können mehr Kabel zwischen der Auflage und der oberen Begrenzung geführt werden als wenn der Halteabschnitt nicht gegenüber der Vertikalen geneigt wäre. Die Form des Halteabschnitts bewirkt, dass im Bügel gehaltene Kabel nicht in die Normalrichtung wegrutschen können, und sie behindert in der gezeichneten Ausführungsform auch eine vertikal nach oben begrenzende Führung für Kabel.

Beim Befestigen des Bügels am Panel wird das J-förmige Teilstück am Panel angelegt und der Bügel so entlang der y-Richtung verschoben, dass der Führungsabschnitt 5.1 in das Führungselement 4 eingeführt wird, und zwar so weit, bis der in der Figur vertikal verlaufende Stützabschnitt 5.2 an einem Anschlagelement 6 ansteht, das wie das Führungselement aus dem Panel geprägt ist und von diesem hervorsteht. Dabei muss der Stützabschnitt 5.2 über ein Rückhalteelement 7 gehoben bzw. geschoben werden, was nur entgegen einer Federwirkung des Runddrahts möglich ist. Der Bügel klickt also quasi beim Einschieben hinter dem Rückhalteelement ein. Das Rückhalteelement 7 sieht man in der Figur nur links von der vollständigen Haltevorrichtung, wo ein weiteres Führungselement 4 zusammen mit dem Anschlagelement und dem Rückhalteelement vorhanden ist und zusammen mit einem weiteren eingeschobenen Bügel eine zweite Haltevorrichtung bilden kann.

Im dargestellten Endzustand des Bügels liegt der Stützabschnitt 5.2 mindestens bereichsweise unterhalb des Führungselements - d.h. die x-Koordinate im eingezeichneten Koordinatensystem ist kleiner - und liegt dort aufgrund der Wirkung der Schwerkraft am Panel 1 an. "Aufgrund der Wirkung der Schwerkraft" heisst, dass die Schwerkraft im Zusammenspiel mit der Wirkung der Führungsfläche mindestens in einem unteren Bereich des Stützabschnittes 5.2 ein Anliegen am Panel bewirkt oder begünstigt. Natürlich ist nicht ausgeschlossen, dass noch andere Kräfte, beispielsweise Klemmkräfte oder Federkräfte existieren, die auch ohne Anwesenheit der Schwerkraft ein Anliegen des Stützabschnitts 5.2 bewirken würden. Die Führungsfläche 4.1 bewirkt also eine Kraftumlenkung, indem sich in Schwerkraftrichtung auf den Halteabschnitt wirkende Kräfte so auswirken, dass der Stützabschnitt mindestens in einem unteren Bereich gegen die Panelfläche gedrückt wird. Je nach Verhältnis zwischen dem Abstand des Kraft-Angiffspunkts vom der Panelfläche zum vertikalen Abstand (d.h. dem Abstand in x-Richtung) des unteren Endes des Stützabschnitts zum Führungselement 4 geschieht das mit Hebelwirkung.

Das Panel 1 von **Figur 1b** ist in x-Richtung breiter als dasjenige von Figur 1a und erlaubt das Anbringen von zwei Haltevorrichtungen übereinander. In der Figur gezeigt sind zwei analog zu den Haltevorrichtungen von Figur 1a ausgebildete Haltevorrichtungen, wobei die Bezugszeichen dieselben Elemente wie in Figur 1a bezeichnen. Ebenfalls in der Figur 1b gezeigt sind Führungselemente 4 mit Anschlagelementen 6 und Rückhaltelementen 7 für weitere Haltevorrichtungen, die beispielsweise ebenfalls paarweise übereinander liegen können. Insgesamt können Panels mit einer beliebigen Anzahl von Führungselementen, beispielsweise mit drei, vier, sechs, acht... Haltevorrichtungen gebildet werden.

Die Haltevorrichtungen gemäss **Figur 2a** unterscheiden sich folgendermassen von derjenigen der Figur 1a:
- Die Führungselemente 14 haben nicht die Form einer Öse sondern wirken als Haken.
- Die Haltevorrichtung besitzt kein Rückhalteelement. Stattdessen bildet das Anstehen eines Bügelabschnittes (es liegt zwischen dem Führungsabschnitt 15.1 und dem Stützabschnitt 15.2) an einer Kante des Führungselementes einen, das erste Anschlagelement 16 ergänzenden, zweiten Anschlag.
- Statt mit einer horizontalen Bewegung wird der Bügel mit einer Vertikalbewegung parallel zur Panelebene von oben nach unten in das im Querschnitt hakenförmige Führungselement eingerastet.
- Das am Panel 11 anliegende Teilstück des Bügels 15 hat eine andere Form. Ebenso wie beim Bügel 5 gemäss Fig. 1a besitzt das Teilstück aber auch oberhalb des Führungselementes liegende Bereiche. Durch diese Form wird ein Anliegen des Bügels am Panel sichergestellt.
- Der Führungsabschnitt 15.1 des Bügels ist nicht an einem Ende des draht- oder stangenförmigen Hebels angeordnet. Vielmehr schliessen auf beiden Seiten weitere Abschnitte an (hier einerseits der oberhalb des Führungselementes liegende am Panel anliegende Abschnitt, und andererseits der Rest des Hebels).
- Anschliessend an die Führungselemente 14 sind im Panel Federschlitze 18 ausgeformt, die die Klemmkraft verringern, mit welcher der Bügel durch das Führungselement gegen das Panel gedrückt wird; dies erlaubt das obere Ende 14.2 des Führungselementes weiter gegen die Panelfläche hin zu ziehen und ermöglicht eine insgesamt elastischere Konstruktion.

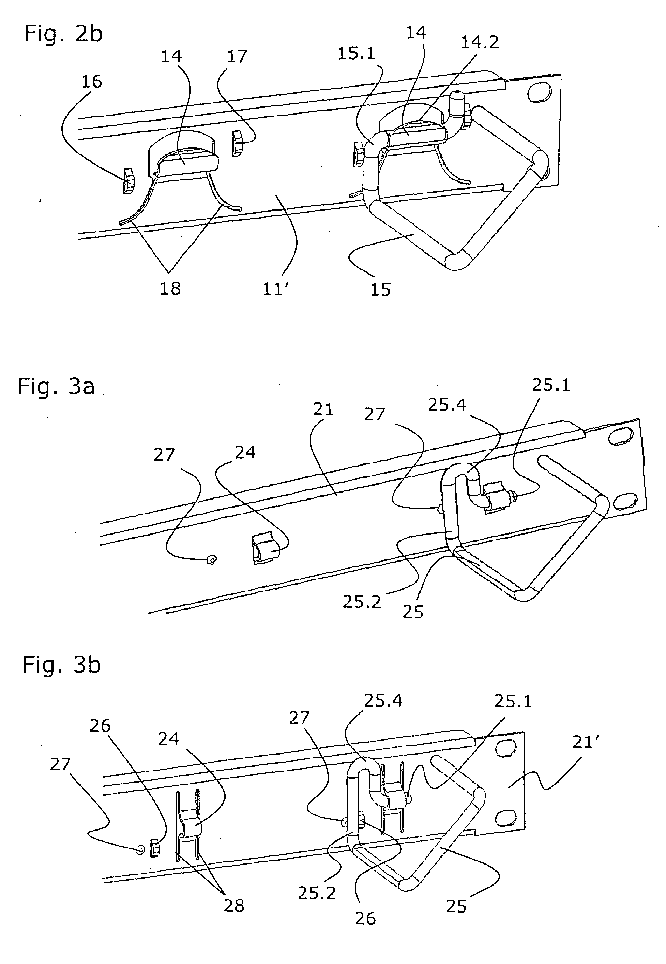

Die Haltevorrichtung gemäss **Figur 2b** entspricht im Wesentlichen derjenigen von Figur 2a. Es sind aber zwei Anschlagelemente 16, 17 vorhanden, die horizontale Bewegungen des Bügels in y-Richtung ganz verhindern. Das zweite Anschlagelement 17 ist ähnlich gross wie das erste Anschlagelement 16. Es ist insbesondere so gross, dass der Bügel 15 mit in das Führungselement 14 eingeführtem Führungsabschnitt 15.1 nicht ohne unverhältnismässigen Kraftaufwand darüber geschoben werden kann..

Die Haltevorrichturigen des Panels 21 von **Figur 3a** und **Figur 3b** besitzen wie diejenige von Fig. 1a als Öse ausgeformte Führungselemente 24. Sie unterscheidet sich von der Haltevorrichtung von Fig. 1a durch die Orientierung des Führungsabschnittes 25.1 des Bügels und durch die Anordnung der Rückhalteelement 27 sowie (Figur 3b) der Anschlagelemente 27. Im Gegensatz zur Figur 1a wird bei den Haltevorrichtungen auf der rechten Bildseite der Bügel aufgrunddessen in die umgekehrte Richtung in das Führungselement eingeschoben, also in -y-Richtung. Auch der Bügel 25 besitzt ein am Panel anliegendes Teilstück welches sowohl einen Abschnitt aufweist, welcher unterhalb des Führungselements liegt (nämlich den Stützabschnitt 25.2) als auch einen Abschnitt, der oberhalb des Führungselementes liegt (nämlich den Bogen 25.4), wodurch Schwenkbewegungen des Halteabschnittes sowohl nach unten als auch nach oben verhindert werden.

In der Ausführungsform von Figur 3a fehlt ausserdem das Anschlagelement. Stattdessen wird ein Anschlag durch ein Anstehen eines Bügelabschnittes an einer Kante des Führungselementes gebildet. In Figur 3b ist ein Anschlagelement 26 vorhanden. Hinzu kommen Federschlitze 28.

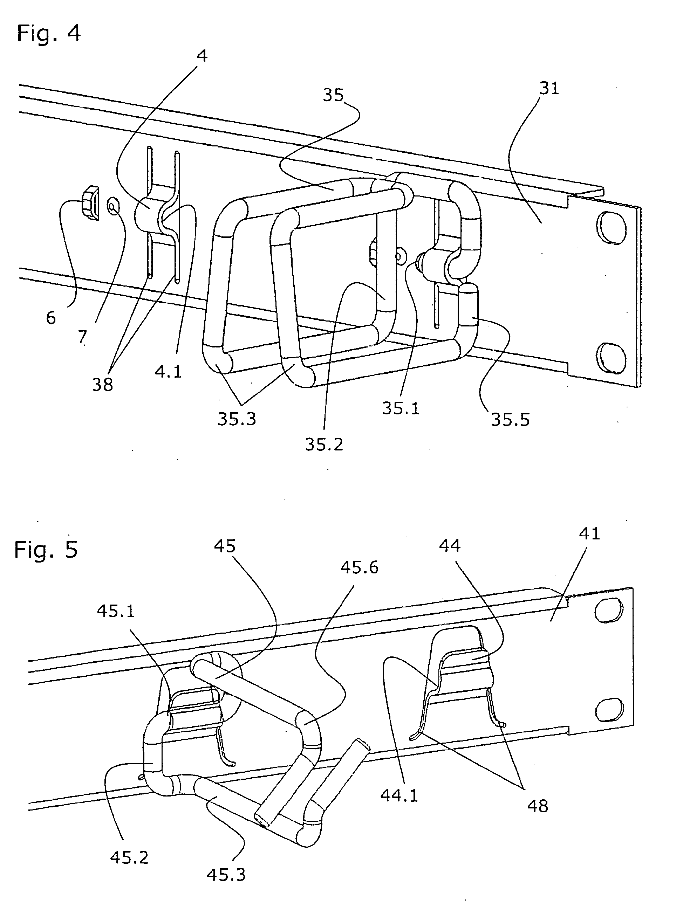

Die in **Figur 4** gezeichnete Haltevorrichtung unterscheidet sich von der Haltevorrichtung gemäss Figur 1a nur durch die Federschlitze 38 im Panel 31 sowie die Form des Bügels 35: Der Halteabschnitt des Bügels ist doppelt geführt, was die Stabilität der geführten Kabel erhöht. An den Halteabschnitt schliesst an dessen Ende ein zweiter Stützabschnitt 35.5 an, was zur Stabilität der ganzen Haltevorrichtung beiträgt.

Die Haltevorrichtung gemäss **Figur 5** besitzt einen Führungselement 44, welches demjenigen von Figur 2a und 2b entspricht. Die Form des Bügels 45 zeichnet sich unter anderem dadurch aus, dass nebst dem ersten Halteabschnitt 45.3 ein zweiter Halteabschnitt 45.6 vorhanden ist. Der zweite Halteabschnitt 45.6 dient in der gezeichneten Ausführungsform dazu, zu verhindern, dass Kabel in Normalrichtung seitlich aus der durch den ersten Halteabschnitt 45.3 gebildeten Halterung wegrutschen.

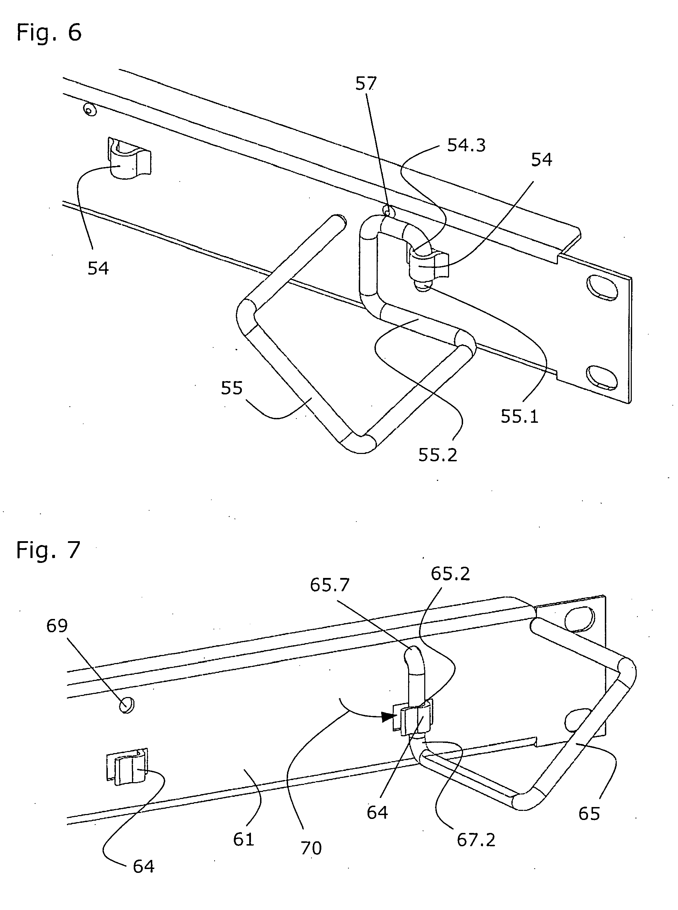

Bei der Haltevorrichtung gemäss **Figur 6** ist das Führungselement 54 so ausgebildet, dass der Führungsabschnitt 55.1 des Bügels 55 vertikal liegt. Stabilität gegen Bewegungen vertikal nach unten wird durch einen Anschlag bewirkt, beispielsweise das Anstehen eines Bügelabschnittes an einer Kante 54.3 des Führungselementes 54. In der gezeichneten Ausführungsform besitzt der Stützabschnitt 55.2 einen horizontalen Teil. Das am Panel anliegende Teilstück ist so ausgebildet, dass nebst Verschwenkbewegungen des Bügels gegen oben und unten auch seitliche Verschwenkbewegungen verhindert werden. Das Rückhalteelement 57 ist in dieser Ausführungsform nicht unbedingt notwendig, da auch die Schwerkraft verhindert, dass der Führungsabschnitt 55.1 aus dem Führungselement rutscht. Trotzdem ist ein Rückhaltelement vorteilhaft..

In der Ausführunsgsform von **Figur 7** ist nebst dem Führungselement 64 eine Öffnung 69 im Panel 61 vorhanden. Der Bügel 65 besitzt einen in diese Öffnung eingreifenden Abschnitt 65.7, welcher Stabilität gegen Bewegungen vertikal nach unten verleiht. Der Bügel wird angebracht, indem der Abschnitt 65.7 in die Öffnung eingeführt wird, wobei der Stützabschnitt 67.2 gegen die Vertikale verschwenkt ist.

Anschliessend wird durch eine Schwenkbewegung in Richtung des Pfeils 70 der Führungsabschnitt 65.1 unter das Führungselement 64 geklickt. Diese Schwenkbewegung ist ebenfalls eine Bewegung des Bügels parallel zur Panelfläche, wobei es sich im Gegensatz zu den übrigen Ausführungsformen nicht um eine Translations- sondern um eine Drehbewegung handelt.

Die gezeichneten Anordnungen sind bloss Beispiele erfindungsgemässer Haltevorrichtungen und können in mancher Hinsicht geändert werden. Insbesondere für die Ausformung des Bügels gibt es praktisch keine Grenzen der Gestaltungsfreiheit, sollten doch nur Führungsabschnitt zum Einführen ins Führungselement, ein unterhalb dieses liegender Stützabschnitt, ein Halteabschnitt und vorzugsweise ein oberhalb des Führungsabschnitts liegender Abschnitt vorhanden sein. Der Halteabschnitt kann beispielsweise nebst der gezeichneten C-Form auch L förmig sein, oder bereichsweise die Form eines Kreis- oder Ellipsensegmentes mit einem Zentriwinkel zwischen 90° und 180° haben etc.

Der Bügel muss auch nicht im Querschnitt rund sein sondern kann mindestens bereichsweise auch ein Rechteckprofil sein oder einen anderen Querschnitt haben. Er kann auch bereichtsweise abgeflacht sein, bspw. durch Walzen oder Prägen. Dies macht insbesondere im Bereich des Halteabschnittes Sinn, besonders dort wo Kabel aufliegen Die angegenben Masse sind ebenfalls blosse Beispiele, der Bügel kann auch deutlich dicker oder dünner sein und/oder in der Dicke über seine Länge variieren.

Obwohl der Bügel in allen gezeichneten Ausführungsformen Abschnitte aufweist, die oberhalb des Führungselementes liegen und am Panel anliegen, ist das keine Notwendigkeit. Wenn solche Abschnitte fehlen, kann der Bügel unter Umständen nach oben schwenkbar sein, und der Stützabschnitt nur unter der Schwerkraftwirkung überhaupt am Panel anliegen. Auch solche Konfigurationen besitzen aber je nach Anwendung genügend Stabilität.

Der Bügel kann metallisch, beispielsweise aus Stahl oder einer Aluminium- oder Kupferlegierung sein. Er kann aber auch aus Kunststoff bestehen.

Nebst der Form des Bügels können auch die Ausgestaltung des Führungselementes sowie dessen Federung variieren. Nebst der bevorzugten Variante, in welcher das Führungselement aus dem Panel durch Prägen oder Tiefziehen geformt ist, kommen auch gegossene oder angeschraubte oder sonstwie befestigte Formen in Frage.

Die Panelfläche muss nicht eine einzige Ebene bilden, sie kann auch nur abschnittsweise eben sein. Das Panel ist in den beschriebenen Ausführungsbeispielen metallisch; es kann aber auch aus Kunststoff sein. Dann sind die Führungselemente vorzugsweise durch Spritzen oder Giessen geformt.

## Patentansprüche

1. Haltevorrichtung für das Führen von Kabeln an einem Panel (1, 11, 21), welches eine Panelfläche und eine dazu senkrechte, horizontale Normalrichtung definiert, wobei die Haltevorrichtung ein am Panel vorhandenes Führungselement (4, 14, 24, 34) sowie einen Bügel (5, 15, 25, 35) aufweist, welcher einen Führungsabschnitt (5.1, 15.1, 25.1, 35.1), einen Stützabschnitt (5.2, 15.2, 25.2, 35.2) und einen Halteabschnitt (5.3, 15.3, 25.3, 35.3) zum Halten von Kabeln besitzt, wobei der Führungsabschnitt in das Führungselement einführbar ist und, wenn der Führungsabschnitt in das Führungselement eingeführt ist, der Stützabschnitt mindestens teilweise in Schwerkraftrichtung unterhalb des Führungsabschnitts liegt, der Halteabschnitt von der Panelfläche absteht, und wobei das Führungselement über die Panelfläche hinausragt und so ausgebildet ist, dass der Führungsabschnitt durch eine Bewegung des Bügels (5, 15, 25, 35) parallel zu der Panelfläche in das Führungselement einführbar ist das Führungselement einen Anschlag für Bewegungen des Führungsabschnitts in die Normalrichtung bildet.

2. Haltevorrichtung nach Anspruch 1, **dadurch gekennzeichnet, dass** das Führungselement einstückig mit dem Panel ausgeformt ist.

3. Haltevorrichtung nach Anspruch 2, **dadurch gekennzeichnet, dass** das Panel (1, 11, 21) mindestens bereichsweise die Form einer Frontplatte oder eines Blechs hat und dass das Führungselement ein aus einer von der Panelfläche definierten Ebene heraus ragender und von dieser vorstehender Abschnitt der Frontplatte bzw. des Blechs ist.

4. Haltevorrichtung nach Anspruch 2 oder 3, **dadurch gekennzeichnet, dass** das Führungselement (4, 14, 24, 34) als aus dem Panel prägegestanzte Öse oder als aus dem Panel geprägter Haken ausgebildet ist.

5. Haltevorrichtung nach einem der vorangehenden Ansprüche, **dadurch gekennzeichnet, dass** der Führungsabschnitt des Bügels in das Führungselement einhängbar, einsteckbar oder einklickbar ist, ohne dass eine Schraubverbindung erstellt oder gelöst werden müsste .

6. Haltevorrichtung nach einem der vorangehenden Ansprüche, **dadurch gekennzeichnet dass** sie gänzlich frei von Schraubverbindungen ist.

7. Haltevorrichtung nach einem der vorangehenden Ansprüche, **gekennzeichnet durch** mindestens ein am Panel vorhandenes Anschlagelement und/oder Rückhalteelement (6, 7, 16, 17, 26, 27) zur Behinderung horizontaler Bewegungen des Bügels.

8. Haltevorrichtung nach einem der vorangehenden Ansprüche, **dadurch gekennzeichnet, dass** ein am Panel anliegendes Teilstück des Bügels zur Behinderung von Schwenkbewegungen nebst dem Stützabschnitt auch einen oberhalb des Führungsabschnitts liegenden Abschnitt umfasst..

9. Haltevorrichtung nach Anspruch 7 und 8, **dadurch gekennzeichnet, dass** mindestens ein Anschlagelement (6, 16, 26) und ein Rückhalteelement (7, 17, 27) vorhanden sind, und dass beim Einführen des Führungsabschnittes des Bügels in das Führungselement ein Abschnitt des Bügels über Rückhalteelement (7, 17, 27) geschoben wird, wobei der Bügel entgegen einer Federwirkung reversibel gebogen wird.

10. Haltevorrichtung nach einem der vorangehenden Ansprüche, **dadurch gekennzeichnet, dass** ein am Panel anliegendes Teilstück des Bügels zur Behinderung von Schwenkbewegungen in horizontaler Richtung beidseitig des Führungsabschnittes liegende Abschnitte umfasst.

11. Haltevorrichtung nach einem der vorangehenden Ansprüche, **dadurch gekennzeichnet, dass** im Panel eine Öffnung vorhanden ist und der Bügel einen in diese Öffnung eingreifenden Abschnitt (65.7) zum Verhindern vertikaler, zur Panelfläche paralleler Bewegungen aufweist.

12. Haltevorrichtung nach einem der vorangehenden Abschnitte, **dadurch gekennzeichnet, dass** der Bügel mindestens abschnittweise als gebogener metallischer Runddraht vorliegt.
